# EUROPEAN PATENT SPECIFICATION

(11) **EP 2 175 746 B1**
(45) Date of publication and mention of the grant of the patent: **17.08.2011**
(21) Application number: 08772034.8
(22) Date of filing: 26.06.2008
(51) Int. Cl.: A23L 1/236

(54) **SWEETENER COMPOSITIONS**
SÜSSMITTELZUSAMMENSETZUNGEN
COMPOSITIONS EDULCORANTES

(30) Priority: 29.06.2007 US 947056 P
(43) Date of publication of application: 21.04.2010
(73) Proprietor: MCNEIL NUTRITIONALS LLC, Fort Washigton PA 19034 (US)
(72) Inventor: CATANI, Steven J., Athens, Georgia 30606 (US); SCHMIDT, Calvin W., Berwyn, Pennsylvania 19312 (US); ROWE, Kenneth F., Princeton, New Jersey 08540 (US)
(74) Representative: Kirsch, Susan Edith
(86) International application number: PCT/US2008/068349
(87) International publication number: WO 2009/006202

(56) References cited:
- GB-A- 1 262 842
- JP-A- 1 312 960
- JP-A- 2004 113 146

## Description

### Field of the Invention

The present invention is directed to erythritol-based sweetener compositions and methods of making such compositions. The erythritol-based sweetener compositions of the present invention include a complex sweetener.

### Background of the Invention

People often customize the taste of food and beverages by adding sweeteners thereto. For example, tabletop sweeteners are added to beverages, such as, coffee and tea; on cereals; on fruit; and as toppings on baked goods. Sweetening a food or beverage with a tabletop sweetener alters its flavor and usually increases its appeal. This behavior is found in all cultures, but is especially prevalent in western cultures.

Personal taste creates considerable variability in the amount of sweetness that one person prefers in a given food or beverage versus another person. For example, the amount of sweetness incorporated into a foodstuff during commercial production may not be adequate to satisfy some consumers while other consumers may find the same amount of sweetness to be excessive. Moreover, consumers often desire to reduce their caloric intake for health or lifestyle reasons. Therefore, there exists a long-felt need for tabletop sweetener products that consumers may use to increase the sweetness of a product at the time of consumption that are consistent with their personal preferences and minimize additional caloric burden.

Tabletop sweeteners are the primary vehicle by which such taste customization is accomplished. Tabletop sweeteners are presently available in many different forms, including, granular, tablets, cohesive non-free flowing compositions (e.g., cubes), and the like.

Many types of sweeteners are available as tabletop sweeteners. These include natural sweeteners, such as sucrose (i.e., cane sugar), honey, high fructose corn syrup, molasses, maple syrup, brown rice syrup, fruit juice sweeteners, barley malt, and the like and artificial sweeteners, such as, sucralose, aspartame, saccharine, and the like.

Commonly available sweeteners have slightly different tastes that are variably preferred by individuals. Many sweeteners impart a bitter taste to the foods they sweeten. Saccharin, for example, is a sweetener that is known to impart a bitter taste. Other sweeteners have other taste components such as lingering metallic tastes, cooling or drying sensations, or combinations of the above sensations. Food ingredients have been used to overcome the bitterness. For example, cream of tartar is included in commonly sold saccharin packets. Additionally, several organizations, such as the Linguagen have recently disclosed compounds that block bitter taste by modifying taste receptor signaling.

The most common sweeteners are nutritive sweeteners. Nutritive sweeteners not only provide sweetness, but are also absorbable into the bloodstream and may be metabolized to provide energy for immediate use or for storage as fat. Nutritive sweeteners are typically extracted from plants that produce them in various quantities and for various purposes. For example, sucrose, a nutritive sweetener in wide spread use, is produced from many sources, e.g., sugar cane and sugar beet roots.

Sugar alcohols are another form of sweetener. Sugar alcohols vary in sweetness from about half as sweet to about as sweet as sucrose. Accordingly, sugar alcohols may be used in place of sugar. Sugar alcohols have about one-half to three-quarters the amount of calories of sugar on a per weight basis. Sugar alcohols are slowly and incompletely absorbed from the small intestine into the blood. Absorbed sugar alcohols are converted to energy by processes that require little or no insulin. Accordingly, these sweeteners may be used by diabetics or those on low-carbohydrate diets.

The taste of many complex sweeteners complement erythritol's taste, but formulating a stable composition with a combination of complex sweeteners and crythritol has been problematic. Traditional methods of making such mixtures are not appropriate. For example, multiple attempts to produce a moisture stable solid composition by agglomeration of agave syrup onto erythritol crystal produced a sticky mass that was not useful as a sweetening composition. Likewise dry-blends of erythritol and molasses solids produced a blend as hydroscopic as the initial molasses. JP 01 312960 A discloses an edulcorant of kneaded powder cake containing erythritol and other saccharides.

What is needed is a solid sweetening composition made of a combination of complex sweeteners and erythritol that is stable and produces a favourable flavour profile for use as a tabletop sweetener. Surprisingly, it has been discovered that a solid, stable, homogeneous, non-compressible sweetening composition can be made by suspending the complex sweeteners in melted erythritol followed by cooling and grinding the resultant solid.

### Summary of the Invention

According to one aspect of the present invention there is provided a solid sweetening composition, as set out in claim 1.

According to another aspect of the present invention there are provided methods for producing a solid sweetening composition, as set out in claims 4, 6, 8 and 9.

According to another aspect of the present invention there is provided a method of sweetening a comestible, as set out in claim 11.

The present invention is directed to a solid sweetening composition comprising, consisting of, and/or consisting essentially of erythritol and a complex sweetener.

The present invention is also directed to a method for producing a solid sweetening composition comprising, consisting of, and/or consisting essentially of erythritol and a complex sweetener, the method comprising, consisting of, and/or consisting essentially of the steps of melting the erythritol, adding the dry complex sweetener to the melted erythritol; mixing the dry complex sweetener into the melted erythritol to form a blend; cooling the blend until solid; and grinding the cooled mixture to a desired particle size, wherein the ratio of erythritol to complex sweetener is between about 95.5 and 25.75% by weight.

The present invention is further directed to a method for producing a solid sweetening composition comprising, consisting of, and/or consisting essentially of erythritol and a complex sweetener, the method comprising, consisting of, and/or consisting essentially of the steps of blending the erythritol and the complex sweetener to form a blend; melting the blend; cooling the melted blend until set; and grinding the cooled mixture to desire particle size, wherein the ratio of erythritol to complex sweetener is between about 95.5 and 25.75% by weight.

The present invention is also directed to a method for producing a solid sweetening composition comprising, consisting of, and/or consisting essentially of erythritol and a liquid complex sweetener, the method comprising, consisting of, and/or consisting essentially of the steps of melting the erythritol, adding the liquid complex sweetener to the melted erythritol; mixing the liquid complex sweetener into the melted erythritol to form a blend; boiling the blend until substantially all water is removed; cooling the blend until solid; and grinding the cooled mixture to desire particle size wherein the ratio of erythritol to complex sweetener is between about 95.5 and 25.75% by weight.

The present invention is further directed to a method for producing a solid sweetening composition comprising, consisting of, and/or consisting essentially of erythritol and a complex sweetener, the method comprising, consisting of, and/or consisting essentially of the steps of blending the erythritol and the liquid complex sweetener to form a blend; melting the blend; boiling the blend until substantially all water is removed; cooling the melted blend until solid; and grinding the cooled mixture to a desired particle size, wherein the ratio of erythritol to complex sweetener is between about 95.5 and 25.75% by weight.

### Brief Description of the Drawings

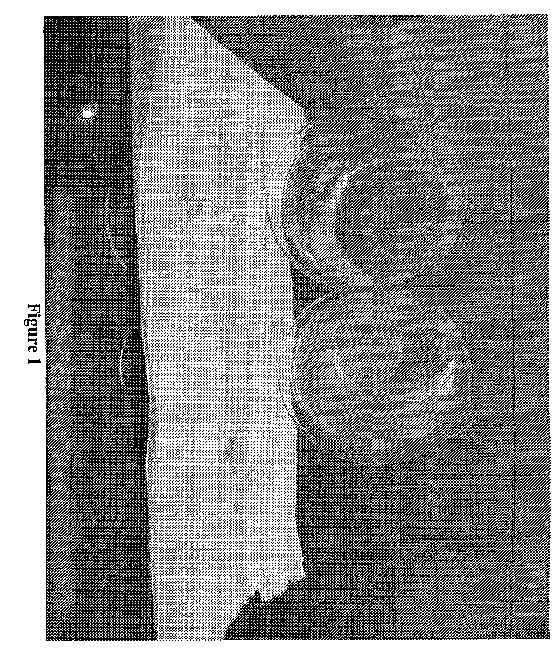

Figure 1 is a black and white photograph of humidified materials.

### Detailed Description

As used herein, the term "high intensity sweetener" means a substance that provides a high sweetness per unit mass compared to a nutritive sweetener and provides little or no nutritive value. Many high intensity sweeteners are known to those skilled in the art and any may be used in the present invention. Examples of high intensity sweeteners useful in the present invention include, for example, aspartame, acesulfame, alitame, brazzein, cyclamic acid, dihydrochalcones, extract of *Dioscorophythum cumminsii*, extract of the fruit of *Pentadiplandra brazzeana,* glycyrrhizin, hernandulcin, monellin, mogroside, neotame, neohesperidin, saccharin, sucralose, extracts of sweet plants, such as stevia, thaumatin, salts, and combinations thereof. A preferred high intensity sweetener according to the present invention is sucralose.

As used herein, the term "sugar alcohol" means a food-grade alcohol derived from a sugar molecule. Sugar alcohols useful in the present invention include, for example, isomalt, erythritol, hydrogenated isomaltulose, hydrogenated starch hydrolyzates, lactitol, maltitol, mannitol, sorbitol, xylitol, and combinations thereof.

As used herein, a "food-grade" material is one that conforms to the standards for foods deemed safe for human consumption set forth in the Codex Alimentarius produced by the World Health Organization (1999).

As used herein, a gram (or other given amount) of Sucrose Equivalent Sweetness ("SES") means the amount of high intensity sweetener needed to be added to an 8 ounce glass of water in order to provide the same sweetness as an independent 8 ounce glass of water containing one gram (or the other given amount) of sucrose. For example, 1/200 g of aspartame will equal about one gram of SES because aspartame is about 200 times sweeter than sucrose. Similarly, about 1/500 g to about 1/600 g of sucralose will provide one gram of SES because sucralose is about 500 to about 600 times sweeter than sucrose.

As used herein, all numerical ranges provided are intended to expressly include at least all numbers that fall between the endpoints of ranges.

### Erythritol

Erythritol (butane-1,2,3,4-tetraol) is a natural, low calorie sweetener that has long been part of the human diet. It has a bright, sweet taste that is about 70% the sweetness of sucrose (i.e., cane sugar) on a weight basis. Erythritol contains less than 0.2 kcals per gram providing the equivalent of a teaspoon of sugar for around 1.2 kcals. While this is not as low as high intensity sweeteners like sucralose, which have no calories, it compares very favorable with sucrose (16 kcals/tsp), fructose (14 kcal/tsp SES), and tagabose (6.6 kcals/tsp SES).

Erythritol is absorbed into the bloodstream in the small intestine, and then for the most part excreted unchanged in the urine. Because erythritol is normally absorbed before it enters the large intestine it does not normally cause laxative effects as are often experienced after over-consumption of other sugar alcohols and most people will consume erythritol with no side effects. This is unique, as other sugar alcohols are not absorbed directly by the body in this manner.

Erythritol has been used in other ways. For example it is known to mask bitter and metallic tastes from certain high intensity sweeteners. A well-known example is extracts of the native south American plant *Stevia Rebaudiana Compositae Bertoni.* The components of the aqueous extracts of this plant, known as steviosides and rebaudiosides are very sweet (180-300 times sweeter than sucrose) but have metallic and bitter notes. Previously disclosed formulas use small amounts of erythritol to mask the bitter notes in composition where the primary sweetness is coming from stevia.

### Complex Sweeteners

A wide variety of complex sweeteners can be used. Complex sweeteners include agave nectar, agave nectar solids, blueberry and other fruit nectars; dried fruits, e.g., blueberries, craisins, and raisins; a fruit nectar, honey; raw cane sugar; muscovado, maple syrup; barley malt syrup; molasses, molasses solids; raw sugar, turbinado sugar, demerara sugar; a sweet polysaccharide, such as chicory FOS inulin and inulins from other plants, such as, garlic, onions, and Jerusalem artichoke, and combinations thereof. As used herein a sweet polysaccharide is one which has an S.E.S. greater than 0.1 teaspoon per gram. In each case the resultant composition retains the some flavor notes of the complex sweetener. The ratio of erythritol to complex sweetener can be any ratio that provides a stable, homogeneous solid composition upon cooling. The preferred ratio is at least about 25 to about 95% by weight by weight erythritol, more preferably between about 50 and about 95% by weight erythritol, and even more preferred is 80% by weight erythritol. While described in terms of a single complex sweetener and erythritol, the compositions contemplated herein can be a mixture of several complex sweeteners and erythritol. The composition can contain other sweeteners, sugars, fibers, or sugar alcohols or nutritional components that are stable under melt conditions.

The compositions of the present invention have SES's that are higher than erythritol, preferable greater than 0.7 grams SES per gram, and more preferably greater 0.75 and even more preferably greater than 0.8 grams SES per gram

The compositions of the present invention have energy contents less than that of a nutritive sugar, preferable less than 10 kcals per tsp of SES, and more preferably greater 8 kcals per tsp of SES and even more preferably greater than 6 kcals per tsp of SES.

Unlike homogenous dry blends of the ingredients in the inventive composition, the sweetening compositions of the present invention are a crystalline matrix, wherein the individual sweeteners combined in a single matrix. This form assures consistent delivery and taste in a system wherein each sweetening ingredient has a distinct taste.

The compositions of the present invention may contain additional ingredients as well, including flavors, aromas, other nutritional components, and mixtures thereof. For example the compositions can contain FOS to further reduce the brightness of the composition. The amount of FOS is an amount readily determined by those skilled in the art.

As used herein, unless otherwise indicated, the term "flavor" means any food-grade material that may be added to the present compositions to provide a desired flavor to a foodstuff. Flavors useful in the present invention include, for example, cream, hazelnut, vanilla, chocolate, cinnamon, pecan, lemon, lime, raspberry, peach, mango, vanillin, butter, butterscotch, tea, orange, tangerine, caramel, strawberry, banana, grape, plum, cherry, blueberry, pineapple, elderberry, watermelon, bubblegum, cantaloupe, guava, kiwi, papaya, coconut, mint, spearmint, derivatives, and combinations thereof.

As used herein, unless otherwise indicated, the term "aroma component" means any food-grade volatile substance that may be employed to produce a desired scent, for example, when mixed with a foodstuff. Aromas useful in the present invention include, for example, essential oils (citrus oil), expressed oils (orange oil), distilled oils (rose oil), extracts (fruits), anethole (liquorice, anise seed, ouzo, fennel), anisole (anise seed), benzaldehyde (marzipan, almond), benzyl alcohol (marzipan, almond), camphor (cinnamomum camphora), cinnamaldehyde (cinnamon), citral (citronella oil, lemon oil), d-limonene (orange) ethyl butanoate (pineapple), eugenol (clove oil), furaneol (strawberry), furfural (caramel), linalool (coriander, rose wood), menthol (peppermint), methyl butanoate (apple, pineapple), methyl salicylate (oil of wintergreen), neral (orange flowers), nerolin (orange flowers), pentyl butanoate (pear, apricot), pentyl pentanoate (apple, pineapple), sotolon (maple syrup, curry, fennugreek), strawberry ketone (strawberry), substituted pyrazines, e.g., 2-ethoxy-3-isopropylpyrazine; 2-methoxy-3-sec-butylpyrazine; and 2-methoxy-3-methylpyrazine (toasted seeds of fenugreek, cumin, and coriander), thujone (juniper, common sage, Nootka cypress, and wormwood), thymol (camphor-like), trimethylamine (fish), vanillin (vanilla), and combinations thereof. Preferred aroma components according to the present invention include, essential oils (citrus oil), expressed oils (orange oil), distilled oils (rose oil), extracts (fruits), benzaldehyde, d-limonene, furfural, menthol, methyl butanoate, pentyl butanoate, salts, derivatives, and combinations thereof.

The aroma component may be present in any amount in the composition. Preferably, the aroma component is present in an amount from about 2- to about 10-times the detectable amount. More preferably, the aroma component is present in an amount from about 2- to about 5-times the detectable amount. As used herein, unless otherwise indicated, the term "detectable amount" is the amount of the aroma component required to produce a scent detectable in the foodstuff. The gas-releasing system of the present invention enhances the sensory experience by releasing and dispersing the aroma component(s).

The formulation can be packaged in packets, as a bulk sweetener, in cubes, or any normal sugar forms.

Sweetener cubes are cohesive non-free flowing compositions that include bulking agents. Bulking agents are typically crystalline carbohydrates, such as, sucrose, which are also available in combination with high intensity sweeteners. More recently a number of lower caloric burden bulking agents have entered the market. Some of these lower caloric burden bulking agents have physical and sensory characteristics similar to sucrose, and others have only a few physical or sensory characteristics similar to sucrose and/or some undesirable characteristics.

As used herein, unless otherwise indicated, the term "binder" refers to any food-grade material that is suitable for facilitating the pressing and formation of tablets. The selection of an appropriate binder is not critical and embraces any conventional binder so long as the binder does not substantially interfere with the self-mixing or the organoleptic properties of the foodstuff. Non-limiting examples of suitable binders useful in the present invention, include microcrystalline cellulose, gum tragacanth, gelatin, leucine, lactose, and combinations thereof. Preferably, the binder, if used, accounts for about 10% to about 15%, by weight of the total composition.

Compositions of the present invention may be made by any processes known to those skilled in the art. To make compositions of the present invention, the following processes can be used:
For a solid complex sweetener, processes that can be used include:
   a. melt the erythritol;
   b. mix in the complex sweetener;
   c. cool, keeping mixed until the melt sets; and
   d. grind into appropriate particle size.
Alternatively the order can be adjusted:
   a. mix in the complex sweetener and erythritol;
   b. melt the mixture;
   c. cool, keeping mixed until the melt sets; and
   d. grind into appropriate particle size.
For complex sweeteners in syrup form the processes that can be used include:
   a. melt the erythritol;
   b. mix in the complex sweetener syrup;
   c. allow to boil until water is removed;
   d. cool, keeping mixed until the melt sets; and
   e. grind into appropriate particle size.
Alternatively the order can be adjusted:
   a. mix in the *Natural* complex sweetener into the erythritol;
   b. melt the erythritol / syrup;
   c. allow to boil until water is removed;
   d. cool, keeping mixed until the melt sets; and
   e. grind into appropriate particle size.

In all cases after the initial solid formation, the mass can be scraped from the original pan. This can accelerate the final crystallization and solid formation.

The melt can be made in a pan, a kettle, a heated extruder, or the like. It can be continuous, batch or semi-batch. Heat can be provided by any means know to those skilled in the art, but hot water or steam are preferred to avoid over beating. Cooling can be done batch-wise or contiguously, or a combination. It can be done in pans, on a cooling wheel or belt, or any other means known to those skilled In the art. Where water is removed the degree of removal can be measure by analyitical analysis well know to those skilled in the art, by change in which, by tracking vapor released, or by other methods know to those skilled in the art.

The following examples are provided to further illustrate the compositions and methods of the present invention. These examples are illustrative only and are not intended to limit the scope of the invention in any way.

### EXAMPLES

### Example 1: Erythriol-Raw Sugar

80 grams of erythritol (ERIDEX™ Powder. Cargill, Inc) is mixed with 20 grams of SUGAR IN THE RAW™ brand turbinado sugar (Cumberland Packing Corp., Brooklyn, NY). The mixture is placed in a 30.48 cm (12 inch) TEFLON® brand (Dupont) coated pan and heated on an electric range until the erythritol is melted, The pan is removed from the heat and agitated until the liquid is set, then placed in a -5°C freezer until cool (about 30 minutes). When cool, the solids are removed and crushed with a mortar and pestle.

The composition has a cool, fruity taste. The calculated SES is 0.76 per gram and delivers about 1 tsp of SES per 5 grams. It provides about 1 kcal of energy per gram.

### Example 2: Erythritol - Dried Blueberry

80 grams of erythritol (ERIDEX™ Powder, Cargill, Inc) is mixed with 20 grams of organic dried blueberries. The mixture is placed in a CUSINART® brand food processor with a chopping blade and processed until the blueberries were reduced to the same particle-size appearance as the erythritol. The mixture is light blue in color. The mix is then placed in a 30.48 cm (12 in.) TEFLON® brand (Dupont) coated pan and heated on an electric range until the erythritol is melted. The pan is removed from the heat and agitated by band until the liquid is set, then allowed to cool under ambient conditions. When cool, the solids are removed and crushed with a sanitized hammer.

The compositions has a cool distinctively blueberry taste 10 grams are placed in a cup of hot water. The beverage has a sweet blueberry taste. After the beverage is consumed, the cup has a small amount of blue particles on the bottom.

### Example 3: Erythritol-Raw Sugar - Citrus

80 grams of erythritol (Eridex Powder, Cargill, Inc) was mixed with 20 grams of SUGAR IN THE RAW™ brand turbinado sugar, Cumberland Packing Corp., Brooklyn, NY). and one packet of TRUE LEMON® crystallized lemon substitute powder (label ingredients: citric acid, lactose, lemon juice, lemon oil, maltodextrin, ascorbic acid) (Grand Brands, Baltimore, MD). The mix is placed in a 30.48 cm (12 in.) TEFLON® (Dupont) coated pan and heated on an electric range until the erythritol is melted. The pan is removed from the heat and agitated until the liquid is set and then allowed to cool for about 30 minutes reaching room temperature The mass remains cool but fluid. It is then scraped from the pan onto a sheet of waxed paper. It is immediately set to a hard solid and is crushed with a small sanitized hammer.

The composition has a cool, sweet, citrus taste.

### Example 4: Erythriotol-Molasses Solids

80 grams of erythritol (ERIDEX™Powder, Cargill, Inc) is mixed with 20 grams of molasses crystals (AUNT PATTY'S ® brand, Glory Bee Foods, Inc. Eugene, OR). The mix is placed in a 30.48 cm(12 in) TEFLON® coated pan and heated on an electric range until the erythritol is melted. The pan is removed from the heat and agitated until the liquid is set and then allowed to cool for about 30 minutes until room temperature. The mass remains cool but fluid. It is then scraped from the pan onto a sheet of waxed paper. It is immediately set to a hard solid and is crushed with a small sanitized hammer.

The composition has a cool, brown sugar taste.

### Example 5 Erythritol-Agave Nectar

80 grams of erythritol (ERIDEX™ Powder, Cargill, Inc) was mixed with 30 grams of Agave Nectar (Organic Nectars, Woodstock NY). The Agave Nectar was 70% solids (21 grams of solids, 9 grams of water). The mix was place in a 30.48 cm (12 in.) Teflon coated pan and heated on an electric range until the erythritol was melted and the fluid came to a boil. The pan was removed from the stove every 2 minutes and weighed until it reached 101 grams, and then cooled and agitated until the liquid set, and then allowed to further cool for approximately 30 min. The mass remained cool but fluid. It was placed in a -5 degree freezer for 1 hour with no change in the consistency. It was then scraped from the pan onto a sheet of waxed paper. It immediately set to a hard solid and was crushed with a small hammer.

The composition has a cool, fruit taste

### Example 6 Hydroscopic Properties example

Two samples were made.

### Sample A

40 grams of erythritol ERIDEX™ Cargill, Inc. Minneapolis, MN) and 10 grams of FOS (RAFTILOSE, Orafti Food Ingredients, Aandorenstraat, Belgium) are mixed, and heated in a pan until the erythritol is melted and allowed to cool in a 5°C freezer overnight. The resultant solid was broken into chunk with a small sanitized hammer and ground in a KITCHEN AID® brand mixer, stifled through a 12 mesh screen, and the mixture that went through the screen is placed in a 1000 ml beaker.

### Sample B

40 grams of erythritol (ERIDEX™, Cargill, Inc, Minneapolis, MN) and 10 grams of FOS (Raftilose, Orafti Food Ingredients) are dry blended and placed in a 1000 ml beaker.

A 30.48 cm x 60.96 cm × 1.54 cm (12" × 24" × 1") deep pan was filled with water and fitted with a metal rack over the opening of the pan. The pan is then placed over an electric heat source and is heated until the water is vigorously boiling. The two beakers containing samples A and B are placed on the rack over the pan and within the very humid environment.

After 10 minutes sample A is still free flowing with the original distinct, particles. Sample B is a single, non-flowing, hard solid mass that had a sticky surface. Figure 1 is a picture of the humidified materials. The beaker on the left and powder in front were sample A, the Beaker on the right was sample B.

The present invention covers modifications and variations of this invention provided that they come within the scope of the appended claims . Unless otherwise defined, all technical and scientific terms used herein have the same meaning as commonly understood by one of ordinary skill in the art to which this invention pertains. All publications, patent applications, patents, and other references mentioned herein are incorporated by reference in their entirety. In case of conflict, the present specification, including definitions will control.

## Claims

1. A solid sweetening composition comprising erythritol and a complex sweetener, wherein the composition is a crystalline matrix containing the erythritol and the complex sweetener and the complex sweetener is a sweet product extracted from a plant source, contains at least one monosaccharide and at least one polysaccharide and has a SES greater than 0.33 grams of sucrose per gram of complex sweetener.

2. The solid sweetening composition of claim 1, wherein the composition provides more than about 0.7 grams of SES per gram and the composition contains less than 16 kcals per 4 gram of SES.

3. The solid sweetening composition of claim 1, wherein the complex sweetener is selected from the group consisting of agave nectar; agave nectar solids, a fruit nectars; a dried fruit, honey; raw cane sugar; muscovado, maple syrup; barley malt syrup; molasses, molasses solids; turbinado sugar, demerara sugar; a sweet polysaccharide, and combinations thereof.

4. A method for producing a solid sweetening composition comprising erythritol and a dry complex sweetener, the method comprising the steps of
a) melting the erythritol;
b) adding the dry complex sweetener to the melted erythritol;
c) mixing the dry complex sweetener into the melted erythritol to form a blend;
d) cooling the blend until solid; and
e) grinding the cooled mixture to a desired particle size,
wherein the ratio of erythritol to complex sweetener is between about 95.5 and 25.75% by weight and the complex sweetener is a sweet product, contains at least one mono saccharide and at least one polysaccharide and has a SES greater than 0.33 grams of sucrose per gram of complex sweetener.

5. The method of claim 4, wherein the complex sweetener is selected from the group consisting of agave nectar solids a dried fruit, raw cane sugar, muscavado, molasses solids, turbinado sugar, demerara sugar, a sweet polysachharide and mixtures thereof.

6. A method for producing a solid sweetening composition comprising erythritol and a complex sweetener, the method comprising the steps of:
(a) blending the erythritol and the complex sweetener to form a blend;
(b) melting the blend;
(c) cooling the melted blend until set; and
(d) grinding the cooled mixture of step (c) to desired particle size,
wherein the ratio of erythritol to complex sweetener is between about 95.5 and 25.75% by weight and the complex sweetener is a sweet product extracted from a plant source, contains at least one monosaccharide and at least one polysaccharide and has a SES greater than 0.33 grams of sucrose per gram of complex sweetener.

7. The method of claim 6. wherein the complex sweetener is selected from the group consisting of agave nectar, agave nectar solids, a fruit nectars; a dried fruit, honey; raw cane sugar; muscovado, maple syrup; barley malt syrup; molasses, molasses solids; turbinado, sugar, demerara sugar; a sweet polysaccharide, and combinations thereof.

8. A method for producing a solid sweetening composition comprising erythritol and a liquid complex sweetener, the method comprising the steps of:
(a) melting the erythritol;
(b) adding the liquid complex sweetener to the melted erythritol;
(c) mixing the liquid complex sweetener into the melted erythritol to form a blend;
(d) boiling the blend until substantially all water is removed;
(e) cooling the blend until solid; and
(f) grinding the cooled mixture of step (e) to desired particle size,
wherein the ratio of erythritol to complex sweetener is between about 95.5 and 25.75% by weight and the complex sweetener is a sweet product extracted from a plant source, contains at least one monosaccharide and at least one polysaccharide and has a SES greater than 0.33 grams of sucrose per gram of complex sweetener.

9. A method for producing a solid sweetening composition comprising erythritol and a liquid complex sweetener, the method comprising the steps of:
a) blending the erythritol and the liquid complex sweetener to form a blend;
b) melting the blend;
c) boiling the blend until substantially all water is removed;
d) cooling the melted blend until solid; and
e) grinding the cooled mixture of step (d) to a desired particle size,
wherein the ratio of erythritol to complex sweetener is between about 95.5 and 25.75% by weight and the complex sweetener is a sweet product extracted from a plant source, contains at least one monosaccharide and at least one polysaccharide and has a SES greater than 0.33 grams of sucrose per gram of complex sweetener.

10. The method of claim 8 or claim 9, wherein the complex sweetener is selected from the group consisting of agave nectar, a fruit nectar, molasses, honey, maple syrup, other tree syrup, barley malt syrup, and combinations thereof.

11. A method of sweetening a comestible comprising adding a sweetening amount of a solid sweetening composition according to any one of claims 1 to 3.

## Patentansprüche

1. Festes Süßungsmittel, umfassend Erythrit und einen komplexen Süßstoff, wobei das Mittel eine das Erythrit und den komplexen Süßstoff enthaltende kristalline Matrix ist und der komplexe Süßstoff ein aus einer Pflanzenquelle extrahiertes süßes Produkt ist, mindestens ein Monosaccharid und mindestens ein Polysaccharid enthält und einen SES-Wert von mehr als 0,33 Gramm Saccharose pro Gramm komplexer Süßstoff aufweist.

2. Festes Süßungsmittel nach Anspruch 1, wobei das Mittel mehr als etwa 0,7 Gramm SES pro Gramm bereitstellt und das Mittel weniger als 16 kcal pro 4 Gramm SES enthält.

3. Festes Süßungsmittel nach Anspruch 1, wobei der komplexe Süßstoff aus der Gruppe bestehend aus Agavennektar, Agavennektarfeststoffen, einem Fruchtnektar; einer getrockneten Frucht, Honig; Rohrohrzucker; Muskovado, Ahornsirup; Gerstenmalzsirup; Melasse, Melassefeststoffen; Turbinadozucker; Demerarazucker; einem süßen Polysaccharid und Kombinationen davon ausgewählt ist.

4. Verfahren zur Herstellung eines festen Süßungsmittels, umfassend Erythrit und einen trockenen komplexen Süßstoff, bei dem man:
a) das Erythrit aufschmilzt;
b) den trockenen komplexen Süßstoff zu dem geschmolzenen Erythrit gibt;
c) den trockenen komplexen Süßstoff in das geschmolzene Erythrit einmischt, wobei man eine Mischung erhält;
d) die Mischung abkühlt, bis sie fest wird; und
e) die abgekühlte Mischung auf eine gewünschte Teilchengröße zerkleinert,
wobei das Verhältnis von Erythrit zu komplexem Süßstoff zwischen etwa 95:5 und 25:75 Gew.-% liegt und der komplexe Süßstoff ein süßes Produkt ist, mindestens ein Monosaccharid und mindestens ein Polysaccharid enthält und einen SES-Wert von mehr als 0,33 Gramm Saccharose pro Gramm komplexer Süßstoff aufweist.

5. Verfahren nach Anspruch 4, bei dem man den komplexen Süßstoff aus der Gruppe bestehend aus Agavennektarfeststoffen, einer getrockneten Frucht, Rohrohrzucker, Muskovado, Melassefeststoffen, Turbinadozucker, Demerarazucker, einem süßen Polysaccharid und Kombinationen davon auswählt.

6. Verfahren zur Herstellung eines festen Süßungsmittels, umfassend Erythrit und einen komplexen Süßstoff, bei dem man:
a) das Erythrit und den komplexen Süßstoff mischt, wobei man eine Mischung erhält;
b) die Mischung aufschmilzt;
c) die geschmolzene Mischung abkühlt, bis sie erstarrt; und
d) die abgekühlte Mischung aus Schritt c) auf
eine gewünschte Teilchengröße zerkleinert, wobei das Verhältnis von Erythrit zu komplexem Süßstoff zwischen etwa 95:5 und 25:75 Gew.-% liegt und der komplexe Süßstoff ein aus einer
Pflanzenquelle extrahiertes süßes Produkt ist, mindestens ein Monosaccharid und mindestens ein Polysaccharid enthält und einen SES-Wert von mehr als 0,33 Gramm Saccharose pro Gramm komplexer Süßstoff aufweist.

7. Verfahren nach Anspruch 6, bei dem man den komplexen Süßstoff aus der Gruppe bestehend aus Agavennektar, Agavennektarfeststoffen, einem Fruchtnektar; einer getrockneten Frucht, Honig; Rohrohrzucker; Muskovado, Ahornsirup; Gerstenmalzsirup; Melasse, Melassefeststoffen; Turbinadozucker; Demerarazucker; einem süßen Polysaccharid und Kombinationen davon ausgewählt.

8. Verfahren zur Herstellung eines festen Süßungsmittels, umfassend Erythrit und einen flüssigen komplexen Süßstoff, bei dem man:
a) das Erythrit aufschmilzt;
b) den flüssigen komplexen Süßstoff zu dem geschmolzenen Erythrit gibt;
c) den flüssigen komplexen Süßstoff in das geschmolzene Erythrit einmischt, wobei man eine Mischung erhält;
d) die Mischung kocht, bis praktisch das gesamte Wasser entfernt ist;
e) die Mischung abkühlt, bis sie fest wird;
und
f) die abgekühlte Mischung aus Schritt (e) auf eine gewünschte Teilchengröße zerkleinert,
wobei das Verhältnis von Erythrit zu komplexem Süßstoff zwischen etwa 95:5 und 25:75 Gew.-% liegt und der komplexe Süßstoff ein aus einer Pflanzenquelle extrahiertes süßes Produkt ist, mindestens ein Monosaccharid und mindestens ein Polysaccharid enthält und einen SES-Wert von mehr als 0,33 Gramm Saccharose pro Gramm komplexer Süßstoff aufweist.

9. Verfahren zur Herstellung eines festen Süßungsmittels, umfassend Erythrit und einen flüssigen komplexen Süßstoff, bei dem man:
a) das Erythrit und den flüssigen komplexen Süßstoff mischt, wobei man eine Mischung erhält;
b) die Mischung aufschmilzt;
c) die Mischung kocht, bis praktisch das gesamte Wasser entfernt ist;
d) die Mischung abkühlt, bis sie fest wird;
und
e) die abgekühlte Mischung aus Schritt (d) auf eine gewünschte Teilchengröße zerkleinert,
wobei das Verhältnis von Erythrit zu komplexem Süßstoff zwischen etwa 95:5 und 25:75 Gew.-% liegt und der komplexe Süßstoff ein aus einer Pflanzenquelle extrahiertes süßes Produkt ist, mindestens ein Monosaccharid und mindestens ein Polysaccharid enthält und einen SES-Wert von mehr als 0,33 Gramm Saccharose pro Gramm komplexer Süßstoff aufweist.

10. Verfahren nach Anspruch 8 oder 9, bei dem man den komplexen Süßstoff aus der Gruppe bestehend aus Agavennektar, einem Fruchtnektar, Melasse, Honig, Ahornsirup, einem anderen Baumsirup, Gerstenmalzsirup und Kombinationen davon ausgewählt.

11. Verfahren zum Süßen eines Lebensmittels, bei dem man eine süßend wirkende Menge eines festen Süßungsmittels gemäß einem der Ansprüche 1 bis 3 zugibt.

## Revendications

1. Composition d'édulcorant solide comprenant l'érythritol et un édulcorant complexe, **caractérisée en ce que** la composition est une matrice cristalline contenant l'érythritol et l'édulcorant complexe et l'édulcorant complexe est un produit sucré extrait d'une source végétale, contient au moins un monosaccharide et au moins un polysaccharide et a un SES supérieur à 0,33 grammes de saccharose par gramme d'édulcorant complexe.

2. Composition d'édulcorant solide selon la revendication 1, **caractérisée en ce que** la composition fournit plus d'environ 0,7 gramme de SES par gramme et la composition contient moins de 16 kcal pour 4 grammes de SES.

3. Composition d'édulcorant solide selon la revendication 1, **caractérisée en ce que** l'édulcorant complexe est choisi dans le groupe constitué de nectar d'agave ; de matières solides de nectar d'agave, de nectars de fruit ; de fruit sec, de miel ; de sucre de cane brut ; de moscovade, de sirop d'érable ; de sirop de malt d'orge ; de mélasse, de matières solides de mélasse ; de sucre de turbinado, de cassonade ; d'un polysaccharide sucré, et de combinaisons de ceux-ci.

4. Méthode de production d'une composition d'édulcorant solide comprenant l'érythritol et un édulcorant complexe sec, la méthode comprenant les étapes consistant à :
a) fondre l'érythritol ;
b) ajouter l'édulcorant complexe sec à l'érythritol fondu ;
c) mélanger l'édulcorant complexe sec dans l'érythritol fondu pour former un mélange ;
d) refroidir le mélange jusqu'à solidification ; et
e) broyer le mélange refroidi jusqu'à une
taille de particule désirée,
le rapport entre l'érythritol et l'édulcorant complexe étant compris entre environ 95,5 et 25,75 % en poids et l'édulcorant complexe étant un produit sucré, contenant au moins un monosaccharide et au moins un polysaccharide et ayant un SES supérieur à 0,33 gramme de saccharose par gramme d'édulcorant complexe.

5. Méthode selon la revendication 4, **caractérisée en ce que** l'édulcorant complexe est choisi dans le groupe constitué de matières solides de nectar d'agave, de fruit sec, de sucre de cane brut, de moscovade, de matières solides de mélasse, de sucre de turbinado, de cassonade, d'un polysaccharide sucré, et de mélanges de ceux-ci.

6. Méthode de production d'une composition d'édulcorant solide comprenant l'érythritol et un
édulcorant complexe, la méthode comprenant les étapes consistant à :
(a) mélanger l'érythritol et l'édulcorant complexe pour former un mélange ;
(b) fondre le mélange ;
(c) refroidir le mélange fondu jusqu'à durcissement ; et
(d) broyer le mélange refroidi de l'étape (c) jusqu'à la taille de particule désirée,
le rapport entre l'érythritol et l'édulcorant complexe étant compris entre environ 95,5 et 25,75 % en poids et l'édulcorant complexe étant un produit sucré extrait d'une source végétale, contenant au moins un monosaccharide et au moins un polysaccharide et ayant un SES supérieur à 0,33 gramme de saccharose par gramme d'édulcorant complexe.

7. Méthode selon la revendication 6, **caractérisée en ce que** l'édulcorant complexe est choisi dans le groupe constitué de nectar d'agave ; de matières solides de nectar d'agave, de nectars de fruit ; de fruit sec, de miel ; de sucre de cane brut ; de moscovade, de sirop d'érable ; de sirop de malt d'orge ; de mélasse, de matières solides de mélasse ; de sucre de turbinado, de cassonade ; d'un polysaccharide sucré, et de combinaisons de ceux-ci.

8. Méthode de production d'une composition d'édulcorant solide comprenant l'érythritol et un édulcorant complexe liquide, la méthode comprenant les étapes consistant à :
(a) fondre l'érythritol ;
(b) ajouter l'édulcorant complexe liquide à l'érythritol fondu ;
(c) mélanger l'édulcorant complexe liquide dans l'érythritol fondu pour former un mélange ;
(d) bouillir le mélange jusqu'à ce que sensiblement toute l'eau soit éliminée ;
(e) refroidir le mélange jusqu'à solidification ; et
(f) broyer le mélange refroidi de l'étape (e) jusqu'à une taille de particule désirée,
le rapport entre l'érythritol et l'édulcorant complexe étant compris entre environ 95,5 et 25,75 % en poids et l'édulcorant complexe étant un produit sucré extrait d'une source végétale, contenant au moins un monosaccharide et au moins un polysaccharide et ayant un SES supérieur à 0,33 gramme de saccharose par gramme d'édulcorant complexe.

9. Méthode de production d'une composition d'édulcorant solide comprenant l'érythritol et un édulcorant complexe liquide, la méthode comprenant les étapes consistant à :
a) mélanger l'érythritol et l'édulcorant complexe liquide pour former un mélange ;
b) fondre le mélange ;
c) bouillir le mélange jusqu'à ce que sensiblement toute l'eau soit éliminée ;
d) refroidir le mélange fondu jusqu'à solidification ; et
e) broyer le mélange refroidi de l'étape (d) jusqu'à la taille de particule désirée,
le rapport entre l'érythritol et l'édulcorant complexe étant compris entre environ 95,5 et 25,75 % en poids et l'édulcorant complexe étant un produit sucré extrait d'une source végétale, contenant au moins un monosaccharide et au moins un polysaccharide et ayant un SES supérieur à 0,33 gramme de saccharose par gramme d'édulcorant complexe.

10. Méthode selon la revendication 8 ou la revendication 9, **caractérisée en ce que** l'édulcorant complexe est choisi dans le groupe constitué de nectar d'agave, de nectar de fruit, de mélasse, de miel, de sirop d'érable, d'autres sirops d'arbre, de sirop de malt d'orge, et de combinaisons de ceux-ci.

11. Méthode d'édulcoration d'une denrée comestible comprenant l'addition d'une quantité sucrante d'une composition d'édulcorant solide selon l'une quelconque des revendications 1 à 3.
